# EUROPÄISCHE PATENTANMELDUNG

(11) **EP 4 371 817 A1**
(43) Veröffentlichungstag der Anmeldung: **22.05.2024**
(21) Anmeldenummer: 23210504.9
(22) Anmeldetag: 17.11.2023
(51) Int. Cl.: B60N 2/75, B60N 3/10, B60R 7/04

(54) **MITTELKONSOLE FÜR EIN FAHRZEUG**

(30) Priorität: 17.11.2022 DE 102022130413
(71) Anmelder: Ford Global Technologies, LLC, Dearborn, MI 48126 (US)
(72) Erfinder: Ottlik, Bernd, 50259 Pulheim (DE); Advena, Robin, 50670 Köln (DE); Hübner, Martin, 51429 Bergisch Gladbach (DE); Klausmann, Tim, 52525 Heinsberg (DE); Bisdorf, Marc, 50733 Köln (DE)
(74) Vertreter: Markowitz, Markus

(57) **Zusammenfassung**

Die Erfindung betrifft eine Mittelkonsole (1) für ein Fahrzeug, aufweisend eine in einem heckseitigen Bereich angeordnete Armlehne (3), eine Aufnahmekammer (4), einen in die Aufnahmekammer (4) einsetzbaren Aufnahmeeinsatz (5, 25) und eine zwischen einer Innenwand (9) der Aufnahmekammer (4) und einer Außenwand (10) des Aufnahmeeinsatzes (5, 25) angeordnete Sicherungseinheit (11) zum Sichern des Aufnahmeeinsatzes (5, 25). Ein frontseitiger Endabschnitt der in der horizontalen Lehnenstellung befindlichen Armlehne (3) liegt auf einem heckseitigen Endabschnitt des in die Aufnahmekammer (4) eingesetzten Aufnahmeeinsatzes (5, 25) auf. Die Sicherungseinheit (11) weist eine Sicherungsaufnahme (12) und einen in die Sicherungsaufnahme (12) eingreifenden Sicherungsvorsprung (13) auf. In den heckseitigen Abschnitt der Aufnahmekammer (4) ist ein weiterer Aufnahmeeinsatz (25) eingesetzt. Der weitere Aufnahmeeinsatz (25) ist wahlweise statt des Aufnahmeeinsatzes (5) in den frontseitigen Abschnitt der Aufnahmekammer (4) einsetzbar.

## Beschreibung

Die Erfindung betrifft eine Mittelkonsole für ein Fahrzeug mit den Merkmalen des Oberbegriffs des Anspruchs 1.

Eine Mittelkonsole eines Fahrzeugs verläuft üblicherweise von einem Kniebereich zwischen zwei vorderen Fußräumen heckseitig bis zwischen zwei Vordersitze. Derartige Mittelkonsolen können sehr unterschiedlich ausgebildet sein und weisen meist wenigstens eine Funktionseinheit auf, wie beispielsweise einen Getränkehalter oder dergleichen.

Eine Mittelkonsole für ein Kraftfahrzeug gemäß der US 7 237 816 B1 umschließt einen inneren Stauraum der durch eine Öffnung von oben zugänglich ist, die von einem als Armlehne dienenden Schwenkdeckel von oben abgeschlossen ist. Die vertikale Vorderseite der Konsole unmittelbar vor der Armlehne ist offen, um eine Zugangsöffnung zu schaffen, die größer ist als die Öffnung, die lediglich durch den schwenkbaren Deckel abgedeckt ist. Ein herausnehmbares Ablagefach im oberen Teil des Stauraums deckt die offene vertikale Vorderseite der Konsole ab. Durch das Öffnen des Schwenkdeckels und das Entfernen des Ablagefachs wird eine Zugangsöffnung zum Zugang zum Stauraum geschaffen, in den ein Laptop oder eine Handtasche oder eine Geldbörse im Innenraum der Mittelkonsole versteckt aufbewahrt werden kann.

Die CN 110 871 728 A offenbart eine Konsole mit einem Becherhalter, aufweisend einen trennbaren Becherhalter mit einem Halterkörper, der einen Halterabschnitt mit einer vorbestimmten Tiefe aufweist, einem Knopf, der an dem Halterkörper angeordnet ist und zum Drücken konfiguriert ist, und einem Gleitstück, das integral mit einem unteren Abschnitt des Knopfes ausgebildet ist und montiert ist, um an einer Außenseite des Halterkörpers gedrückt zu werden. Des Weiteren weist die Konsole ein Becherhalterablagefach auf, das mit einer Gleitaussparung entlang einer Längsrichtung an einer Innenwandfläche davon vorgesehen ist.

Die JP 2012 140 087 A offenbart eine Konsole mit einem abnehmbaren Getränkehalter, der wahlweise seitlich an eine Konsolenwand einhängbar oder in einer Aufnahmekammer der Konsole einfügbar ist. Zudem weist die Konsole eine schwenkbare Armlehne auf, mit der die Aufnahmekammer wahlweise verschließbar oder freigebbar ist.

Der Erfindung liegt die Aufgabe zugrunde, eine Mittelkonsole mit nutzerseitig konfigurierbarem Aufnahmeraum bereitzustellen.

Erfindungsgemäß wird die Aufgabe durch eine Mittelkonsole mit den Merkmalen des Anspruchs 1 gelöst.

Aufgezeigt wird eine Mittelkonsole für ein Fahrzeug, aufweisend wenigstens eine in einem heckseitigen Bereich der Mittelkonsole angeordnete Armlehne, die heckseitig um eine quer zu einer Längserstreckung der Mittelkonsole verlaufende Schwenkachse zwischen einer horizontalen Lehnenstellung und einer vertikalen Freigabestellung schwenkbar angeordnet ist, wenigstens eine teilweise frontseitig versetzt zu der in der horizontalen Lehnenstellung befindlichen Armlehne angeordnete, nach oben offene Aufnahmekammer, wenigstens einen von oben zumindest teilweise in die Aufnahmekammer einsetzbaren Aufnahmeeinsatz und wenigstens eine zwischen einer frontseitigen und/oder seitlichen Innenwand der Aufnahmekammer einerseits und einer Außenwand des Aufnahmeeinsatzes andererseits angeordnete Sicherungseinheit zum Sichern des Aufnahmeeinsatzes in einer Höhenrichtung der Mittelkonsole innerhalb der Aufnahmekammer, wobei ein frontseitiger Endabschnitt der in der horizontalen Lehnenstellung befindlichen Armlehne auf einem heckseitigen Endabschnitt des in die Aufnahmekammer eingesetzten Aufnahmeeinsatzes aufliegt. Gemäß der Erfindung weist die Sicherungseinheit wenigstens eine Sicherungsaufnahme und wenigstens einen in die Sicherungsaufnahme eingreifenden Sicherungsvorsprung auf, wobei sich die Aufnahmekammer bis in einen unterhalb der in ihrer horizontalen Lehnenstellung befindlichen Armlehne befindlichen heckseitigen Bereich der Mittelkonsole erstreckt, wobei in den unterhalb der in ihrer horizontalen Lehnenstellung befindlichen Armlehne befindlichen heckseitigen Abschnitt der Aufnahmekammer wenigstens ein weiterer Aufnahmeeinsatz derart von oben zumindest teilweise eingesetzt ist, dass der weitere Aufnahmeeinsatz heckseitig versetzt zu dem in einem frontseitigen Abschnitt der Aufnahmekammer eingesetzten Aufnahmeeinsatz angeordnet ist, und wobei der weitere Aufnahmeeinsatz wahlweise statt des Aufnahmeeinsatzes in den frontseitigen Abschnitt der Aufnahmekammer einsetzbar ist.

Vorteilhafte Ausgestaltungen sind in den Unteransprüchen offenbart.

Es ist darauf hinzuweisen, dass die in der nachfolgenden Beschreibung einzeln aufgeführten Merkmale sowie Maßnahmen in beliebiger technisch sinnvoller Weise miteinander kombiniert werden können und weitere Ausgestaltungen der Erfindung aufzeigen. Die Beschreibung charakterisiert und spezifiziert die Erfindung insbesondere im Zusammenhang mit den Figuren zusätzlich.

Der heckseitige Endabschnitt des von oben in die Aufnahmekammer eingesetzten Aufnahmeeinsatzes wird mittels des frontseitigen Endabschnitts der in der horizontalen Lehnenstellung befindlichen Armlehne in Höhenrichtung der Mittelkonsole gesichert, indem der frontseitige Endabschnitt der in der horizontalen Lehnenstellung befindlichen Armlehne auf dem heckseitigen Endabschnitt des in die Aufnahmekammer eingesetzten Aufnahmeeinsatzes aufliegt und dadurch den heckseitigen Endabschnitt des Aufnahmeeinsatzes niederhält. Hierdurch kann der Aufnahmeeinsatz während einer Fahrt des Fahrzeugs quietsch- und klapperfrei in der Aufnahmekammer gehalten werden. Zudem können durch diese Sicherung mit der Armlehne Fertigungstoleranzen kompensiert werden, indem mit der Armlehne ein Anpressdruck auf den heckseitigen Endabschnitt des Aufnahmeeinsatzes ausgeübt wird. Ferner ist der Aufnahmeeinsatz auch im Falle eines Extremereignisses in der Aufnahmekammer gesichert, was ein ungewolltes Lösen und unkontrolliertes Umherfliegen verhindert.

Die Begriffe "heckseitig" und "frontseitig" sind auf das Fahrzeug bezogen, in dem die Mittelkonsole verbaut ist, so dass die Mittelkonsole insbesondere ein frontseitiges Ende und ein heckseitiges Ende aufweist.

Wird der Aufnahmeeinsatz aus der Aufnahmekammer entfernt, bietet die Mittelkonsole ein größeres Aufnahmevolumen zum Aufnehmen von größeren Gegenständen, wie beispielsweise Taschen oder dergleichen. Daher sollten in der Aufnahmekammer keine Befestigungsmittel, wie beispielsweise Öffnungen oder Druckknöpfe vorhanden sein, die einen Stoff, einen Reißverschluss oder dergleichen einer in der Aufnahmekammer angeordneten Tasche kontaktieren könnten. Erfindungsgemäß kann auf solche Befestigungsmittel verzichtet werden, da der in die Aufnahmekammer eingesetzte Aufnahmeeinsatz allein mittels der wenigstens einen Sicherungseinheit frontseitig und mittels der Armlehne heckseitig an der übrigen Mittelkonsole lagestabil befestigt wird. Zusätzliche Befestigungsmittel sind nicht erforderlich.

Die in dem heckseitigen Bereich der Mittelkonsole angeordnete Armlehne deckt in ihrer horizontalen Lehnenstellung, in der die Armlehne ihre eigentliche Armlehnenfunktion aufweist, einen heckseitigen Abschnitt der Aufnahmekammer ab, so dass ein von dem Aufnahmeeinsatz bereitgestellter Aufnahmeraum vollständig von oben zugänglich ist. In ihrer vertikalen Freigabestellung gibt die Armlehne den heckseitigen Abschnitt der Aufnahmekammer teilweise oder vollständig frei, so dass auch der heckseitige Abschnitt der Aufnahmekammer zur Aufnahme von wenigstens einem Gegenstand verwendet werden kann, während gleichzeitig der Aufnahmeeinsatz in einen frontseitigen Abschnitt der Aufnahmekammer eingesetzt ist. Die Aufnahmekammer ist also teilweise frontseitig versetzt zu der in der horizontalen Lehnenstellung befindlichen Armlehne angeordnet und kann sich heckseitig bis unter die Armlehne erstrecken.

Der Aufnahmeeinsatz kann als nach oben offener Behälter ausgebildet sein, beispielsweise als Getränkehalter, Ablagefach oder dergleichen. Beispielsweise kann der Aufnahmeeinsatz als Getränkehalter mit zwei seitlich zueinander und beabstandet voneinander angeordneten Halteaufnahmen ausgebildet sein, zwischen denen eine Verengung des Aufnahmeraums des Aufnahmeeinsatzes ausgebildet ist.

Mittels der Sicherungseinheit kann der Aufnahmeeinsatz frontseitig und/oder seitlich in Höhenrichtung innerhalb der Aufnahmekammer gesichert werden. Hierzu kann die Sicherungsaufnahme an einer frontseitigen Außenwand des Aufnahmeeinsatzes und/oder an einer seitlich an diese Außenwand angrenzenden Seitenwand des Aufnahmeeinsatzes angeordnet sein, während der Sicherungsvorsprung an einer frontseitigen Innenwand der Aufnahmekammer und/oder an einer seitlich an diese Innenwand angrenzenden Seitenwand der Aufnahmekammer angeordnet sein kann. Alternativ kann der Sicherungsvorsprung an einer frontseitigen Außenwand des Aufnahmeeinsatzes und/oder an einer seitlich an diese Außenwand angrenzenden Seitenwand des Aufnahmeeinsatzes angeordnet sein, während die Sicherungsaufnahme an einer frontseitigen Innenwand der Aufnahmekammer und/oder an einer seitlich an diese Innenwand angrenzenden Seitenwand der Aufnahmekammer angeordnet sein kann. Der Sicherungseinheit kann beispielsweise mittig und frontseitig zwischen der frontseitigen Außenwand des Aufnahmeeinsatzes und der frontseitigen Innenwand der Aufnahmekammer angeordnet sein oder in einem frontseitigen Eckbereich der Aufnahmekammer angeordnet sein oder sich frontseitig über im Wesentlichen die Breite des Aufnahmeeinsatzes erstrecken.

Während des Einsetzens des Aufnahmeeinsatzes von oben in die Aufnahmekammer wird der Sicherungsvorsprung in die Sicherungsaufnahme eingefügt, wozu der Aufnahmeeinsatz geneigt gehalten wird. Anschließend kann der Aufnahmeeinsatz mittels des entsprechend durch die Sicherungseinheit gebildeten Gelenks verschwenkt werden, beispielsweise bis ein Boden des Aufnahmeeinsatzes auf einem dafür vorgesehenen Auflageabschnitt der Aufnahmekammer aufsitzt oder bis der heckseitige Endabschnitt des Aufnahmeeinsatzes auf wenigstens einem Auflageabschnitt der Mittelkonsole aufliegt. Zuletzt kann die Armlehne von ihrer vertikalen Freigabestellung, in die sie vor Beginn des Einsetzens des Aufnahmeeinsatzes von oben in die Aufnahmekammer gebracht worden ist, in ihre horizontale Lehnenstellung verschwenkt werden, so dass der frontseitige Endabschnitt der Armlehne mittelbar oder unmittelbar auf dem heckseitigen Endabschnitt des Aufnahmeeinsatzes aufliegt und hierdurch den Aufnahmeeinsatz heckseitig in der Aufnahmekammer sichert. Durch eine Umkehrung dieser Vorgänge kann der Aufnahmeeinsatz wieder aus der Aufnahmekammer entfernt werden.

Die erfindungsgemäße Mittelkonsole kann insbesondere in einem Fahrzeug in Form eines Kraftwagens, beispielsweise eines Personenkraftwagens oder Nutzkraftwagens, verbaut sein. Ein solches Fahrzeug stellt daher einen weiteren erfindungsgemäßen Aspekt dar.

Gemäß einer vorteilhaften Ausgestaltung ist an dem frontseitigen Endabschnitt der Armlehne und/oder an dem heckseitigen Endabschnitt des Aufnahmeeinsatzes wenigstens ein Dämpfungselement angeordnet, über das der frontseitige Endabschnitt der in der horizontalen Lehnenstellung befindlichen Armlehne auf dem heckseitigen Endabschnitt des in die Aufnahmekammer eingesetzten Aufnahmeeinsatzes aufliegt. Hierdurch können Fertigungstoleranzen in Höhenrichtung der Mittelkonsole kompensiert werden, indem das Dämpfungselement bei in ihrer horizontalen Lehnenstellung befindlicher Armlehne mehr oder weniger stark komprimiert wird. Dies verhindert zudem eine Erzeugung von Geräuschen durch Relativbewegungen zwischen dem Aufnahmeeinsatz und der Armlehne während einer Fahrt des Fahrzeugs. Das Dämpfungselement kann beispielsweise gummielastisch oder als Filzpolster ausgebildet sein.

Gemäß einer weiteren vorteilhaften Ausgestaltung weist die Mittelkonsole wenigstens ein zwischen einem heckseitigen Seitenwandvorsprung der Aufnahmekammer einerseits und einer heckseitigen Außenwand des Aufnahmeeinsatzes andererseits angeordnetes, gummielastisches Vorspannungselement auf, das bei in die Aufnahmekammer eingesetztem Aufnahmeeinsatz zwischen dem jeweiligen Seitenwandvorsprung der Aufnahmekammer und der jeweiligen Außenwand des Aufnahmeeinsatzes eigespannt ist. Hierdurch können Fertigungstoleranzen in Längsrichtung der Mittelkonsole kompensiert werden, indem das gummielastische Vorspannungselement bei in die Aufnahmekammer eingesetztem Aufnahmeeinsatz mehr oder weniger stark komprimiert wird. Dies verhindert zudem eine Erzeugung von Geräuschen durch Relativbewegungen zwischen dem Aufnahmeeinsatz und der Armlehne während einer Fahrt des Fahrzeugs. Alternativ kann statt des gummielastischen Vorspannungselements wenigstens ein Filzpolster entsprechend vorhanden sein.

Gemäß einer weiteren vorteilhaften Ausgestaltung ist an einer frontseitigen Außenwand des Aufnahmeeinsatzes wenigstens ein frontseitiger Positionierungsvorsprung angeordnet. Der Aufnahmeeinsatz stützt sich frontseitig über den frontseitigen Positionierungsvorsprung an der frontseitigen Innenwand der Aufnahmekammer ab. Dabei kann der Positionierungsvorsprung gummielastisch oder als Filzpolter ausgebildet sein. Hierdurch können Fertigungstoleranzen in Längsrichtung der Mittelkonsole kompensiert werden, indem der frontseitige Positionierungsvorsprung bei in die Aufnahmekammer eingesetztem Aufnahmeeinsatz mehr oder weniger stark komprimiert wird. Dies verhindert zudem eine Erzeugung von Geräuschen durch Relativbewegungen zwischen dem Aufnahmeeinsatz und der Armlehne während einer Fahrt des Fahrzeugs.

Gemäß einer weiteren vorteilhaften Ausgestaltung ist an wenigstens einer seitlichen Außenwand des Aufnahmeeinsatzes wenigstens ein seitlicher Positionierungsvorsprung angeordnet. Der Aufnahmeeinsatz stützt sich seitlich über den seitlichen Positionierungsvorsprung an der seitlichen Innenwand der Aufnahmekammer ab. Dabei kann der seitliche Positionierungsvorsprung gummielastisch oder als Filzpolter ausgebildet sein. Hierdurch können Fertigungstoleranzen in Querrichtung der Mittelkonsole kompensiert werden, indem der seitliche Positionierungsvorsprung bei in die Aufnahmekammer eingesetztem Aufnahmeeinsatz mehr oder weniger stark komprimiert wird. Dies verhindert zudem eine Erzeugung von Geräuschen durch Relativbewegungen zwischen dem Aufnahmeeinsatz und der Armlehne während einer Fahrt des Fahrzeugs. Es kann auch an jeder seitlichen Außenwand des Aufnahmeeinsatzes jeweils wenigstens ein entsprechender seitlicher Positionierungsvorsprung angeordnet sein.

Gemäß einer weiteren vorteilhaften Ausgestaltung ist an wenigstens einer seitlichen Außenwand des Aufnahmeeinsatzes wenigstens eine Abstandsrippe angeordnet. Hierdurch wird die Einsatztiefe des Aufnahmeeinsatz in die Aufnahmekammer bestimmt. Innerhalb der Aufnahmekammer kann wenigstens eine Auflageschulter angeordnet sein, auf der die Abstandsrippe oben aufsitzt, wenn der Aufnahmeeinsatz bestimmungsgemäß in die Aufnahmekammer eingesetzt ist. Dabei kann die Abstandsrippe beispielsweise gummielastisch ausgebildet sein. Hierdurch können Fertigungstoleranzen in Höhenrichtung der Mittelkonsole kompensiert werden, indem die Abstandsrippe bei in die Aufnahmekammer eingesetztem Aufnahmeeinsatz mehr oder weniger stark komprimiert wird. Dies verhindert zudem eine Erzeugung von Geräuschen durch Relativbewegungen zwischen dem Aufnahmeeinsatz und der Armlehne während einer Fahrt des Fahrzeugs. Es kann auch an jeder seitlichen Außenwand des Aufnahmeeinsatzes jeweils wenigstens eine entsprechende Abstandsrippe angeordnet sein. In bevorzugter Ausgestaltung können an den seitlichen Außenwänden mehrerer zueinander beabstandete Abstandsrippen vorgesehen sein, die in ihrer Höhenerstreckung unterschiedlich sind, um so gegebenenfalls eine Neigung der Auflageschulter zusätzlich zu benannten Wirkungen auszugleichen.

Gemäß einer weiteren vorteilhaften Ausgestaltung ist in der Aufnahmekammer wenigstens eine Führungskontur angeordnet, entlang der ein Führungsabschnitt des Aufnahmeeinsatzes während eines Einsetzens des Aufnahmeeinsatzes in die Aufnahmekammer führbar ist. Hierdurch kann der Nutzer beim oben beschriebenen bestimmungsgemäßen Einsetzen des Aufnahmeeinsatzes in die Aufnahmekammer unterstützt werden, so dass der Sicherungsvorsprung während des Einsetzens in Eingriff mit der Sicherungsaufnahme bleibt. Die Führungskontur kann beispielsweise an wenigstens einer Längsseite der Aufnahmekammer angeordnet sein. Der Führungsabschnitt des Aufnahmeeinsatzes kann durch einen abgerundeten unteren heckseitigen Abschnitt des Aufnahmeeinsatzes gebildet sein.

Wie oben bereits erwähnt, erstreckt sich die Aufnahmekammer bis in einen unterhalb der in ihrer horizontalen Lehnenstellung befindlichen Armlehne befindlichen heckseitigen Bereich der Mittelkonsole, wobei in den unterhalb der in ihrer horizontalen Lehnenstellung befindlichen Armlehne befindlichen heckseitigen Abschnitt der Aufnahmekammer wenigstens ein weiterer Aufnahmeeinsatz derart von oben zumindest teilweise eingesetzt ist, dass der weitere Aufnahmeeinsatz heckseitig versetzt zu dem in einem frontseitigen Abschnitt der Aufnahmekammer eingesetzten Aufnahmeeinsatz angeordnet ist, und wobei der weitere Aufnahmeeinsatz wahlweise statt des Aufnahmeeinsatzes in den frontseitigen Abschnitt der Aufnahmekammer einsetzbar ist. Hierdurch kann die Mittelkonsole je nach Bedarf nutzerseitig konfiguriert werden. Dabei kann die Aufnahmekammer derart ausgebildet sein, dass der weitere Aufnahmeeinsatz in seinem in den frontseitigen Abschnitt der Aufnahmekammer eingesetzten Zustand gegenüber seinem in den heckseitigen Abschnitt der Aufnahmekammer eingesetzten Zustand um eine vertikale Achse um 90° gedreht angeordnet ist.

Weitere vorteilhafte Ausgestaltungen der Erfindung sind in den Unteransprüchen und der folgenden Figurenbeschreibung offenbart. Es zeigt:
- Fig. 1a: eine schematische Längsschnittdarstellung eines Ausführungsbeispiels für eine Mittelkonsole;
- Fig. 1b: eine schematische und perspektivische Darstellung der in Fig. 1 gezeigten Mittelkonsole von schräg oben;
- Fig. 2a: eine schematische und perspektivische Darstellung des in Fig. 1 gezeigten Aufnahmeeinsatzes von schräg oben;
- Fig. 2b: eine weitere schematische und perspektivische Darstellung des in Fig. 1 gezeigten Aufnahmeeinsatzes von schräg oben;
- Fig. 3a: eine schematische und perspektivische Darstellung eines weiteren Aufnahmeeinsatzes für die in Fig. 1 gezeigte Mittelkonsole von schräg oben;
- Fig. 3b: eine weitere schematische und perspektivische Darstellung des in Fig. 3a gezeigten weiteren Aufnahmeeinsatzes von schräg oben;
- Fig. 4: schematische Längsschnittdarstellungen zu einem Einsetzvorgang zum Einsetzen des in den Fign. 1 und 2 gezeigten Aufnahmeeinsatzes in die Aufnahmekammer;
- Fig. 5: schematische Längsschnittdarstellungen zu einem Einsetzvorgang zum Einsetzen des in Fig. 3 gezeigten weiteren Aufnahmeeinsatzes in die Aufnahmekammer;
- Fig. 6a: eine schematische und perspektivische Darstellung eines Ausführungsbeispiels für eine erfindungsgemäße Mittelkonsole in einer ersten Konfiguration;
- Fig. 6b: eine schematische und perspektivische Darstellung der in Fig. 6a gezeigten Mittelkonsole in einem geöffneten Zustand;
- Fig. 6c: eine schematische und perspektivische Darstellung der in Fig. 6b gezeigten Mittelkonsole mit entferntem Aufnahmeeinsatz;
- Fig. 6d: eine schematische und perspektivische Darstellung der in Fig. 6c gezeigten Mittelkonsole mit versetztem weiteren Aufnahmeeinsatz; und
- Fig. 6e: eine schematische und perspektivische Darstellung der in Fig. 6d gezeigten Mittelkonsole im geschlossenen Zustand.

In den unterschiedlichen Figuren sind gleiche Teile stets mit denselben Bezugszeichen versehen, weswegen diese in der Regel auch nur einmal beschrieben werden.

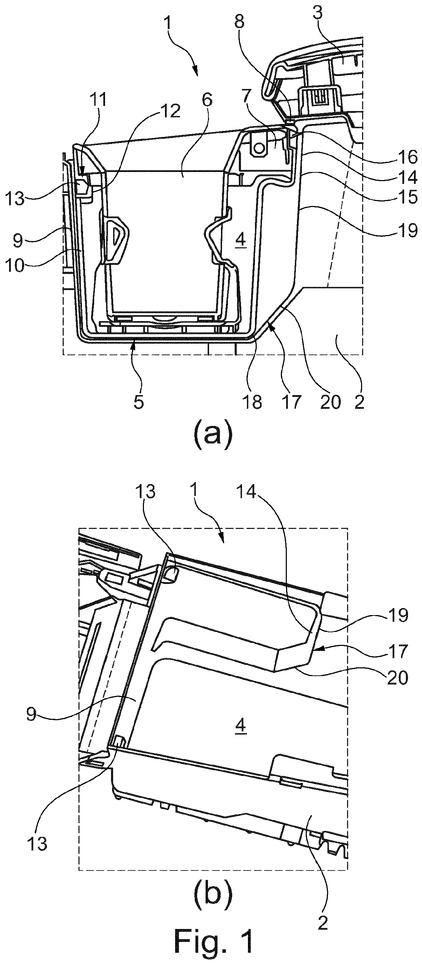

Fig. 1a zeigt eine schematische Längsschnittdarstellung eines Ausführungsbeispiels für eine Mittelkonsole 1 für ein nicht gezeigtes Fahrzeug.

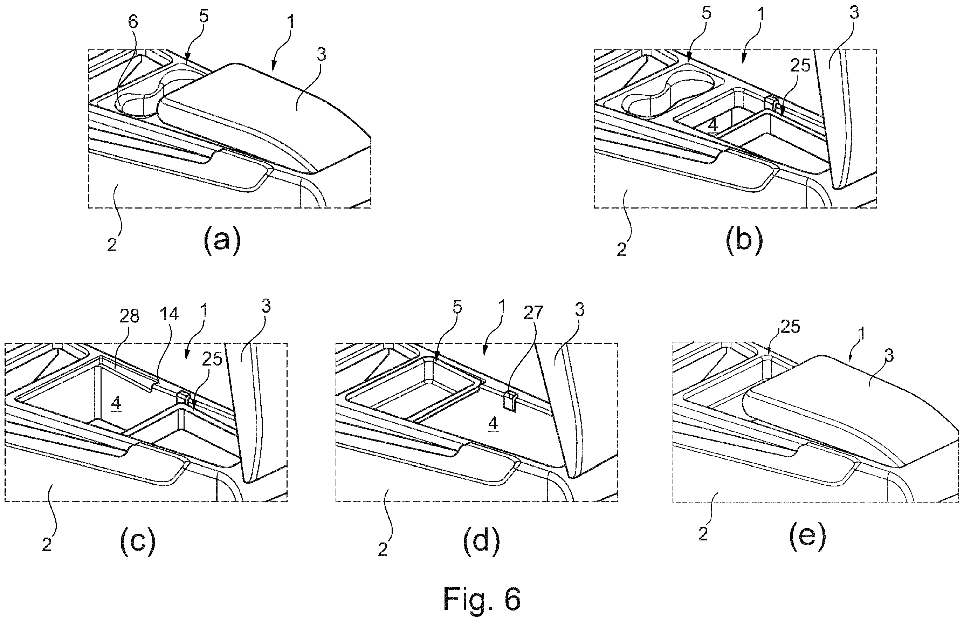

Die Mittelkonsole 1 weist einen Grundkörper 2 auf, an dem eine in einem heckseitigen Bereich der Mittelkonsole 1 angeordnete Armlehne 3 vorhanden ist, die heckseitig um eine quer zu einer parallel zur Zeichenebene von Fig. 1a gegebene Längserstreckung der Mittelkonsole 1 verlaufende, nicht gezeigte Schwenkachse zwischen der in Fig. 1a gezeigten horizontalen Lehnenstellung und einer vertikalen Freigabestellung, wie sie in den Figuren 6b bis 6d gezeigt ist, schwenkbar angeordnet ist.

Des Weiteren weist die Mittelkonsole 1 eine teilweise frontseitig versetzt zu der in der horizontalen Lehnenstellung befindlichen Armlehne 3 angeordnete, nach oben offene Aufnahmekammer 4 auf. Die Aufnahmekammer 4 erstreckt sich heckseitig bis in einen unterhalb der in ihrer horizontalen Lehnenstellung befindlichen Armlehne 3 befindlichen heckseitigen Bereich der Mittelkonsole 1.

Zudem weist die Mittelkonsole 1 einen von oben zumindest teilweise in die Aufnahmekammer 4 eingesetzten Aufnahmeeinsatz 5 auf. Der Aufnahmeeinsatz 5 ist als Getränkehalter beispielhaft mit zwei seitlich nebeneinander angeordneten Halteaufnahmen 6 ausgebildet, von denen in Fig. 1a lediglich eine Halteaufnahme 6 gezeigt ist. Der Aufnahmeeinsatz 5 weist an seinem oberen Ende einen heckseitigen Kragen 7 auf, der einen heckseitigen Endabschnitt des Aufnahmeeinsatzes 5 bildet, auf dem ein frontseitiger Endabschnitt der in der horizontalen Lehnenstellung befindlichen Armlehne 3 aufliegt. Hierdurch wird der Aufnahmeeinsatz 5 heckseitig mittels der Armlehne 3 in Höhenrichtung der Mittelkonsole 1 in der Aufnahmekammer 4 gesichert.

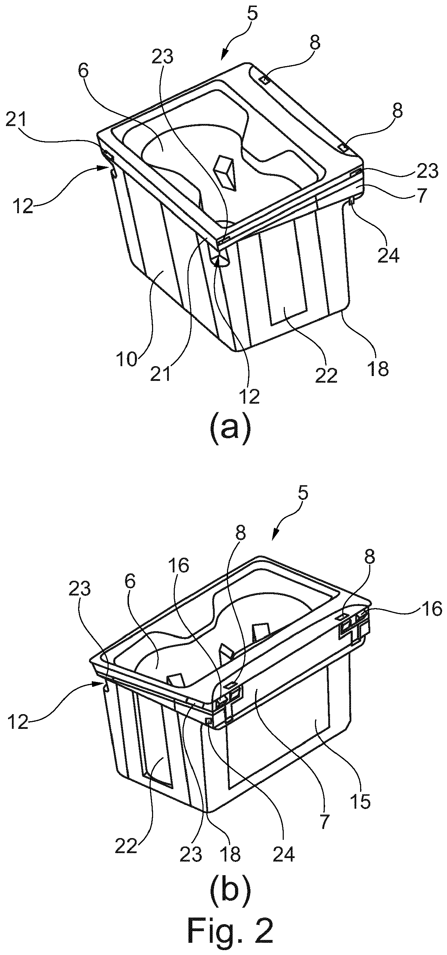

Dabei ist an dem frontseitigen Endabschnitt der Armlehne 3 wenigstens ein Dämpfungselement 8 angeordnet, über das der frontseitige Endabschnitt der in der horizontalen Lehnenstellung befindlichen Armlehne 3 auf dem heckseitigen Endabschnitt des in die Aufnahmekammer 4 eingesetzten Aufnahmeeinsatzes 5 aufliegt. Alternativ oder additiv kann das Dämpfungselement 8 an dem heckseitigen Endabschnitt des Aufnahmeeinsatzes 5 angeordnet sein, wie es in Fig. 2 gezeigt ist.

Die Mittelkonsole 1 weist darüber hinaus zwei zwischen einer frontseitigen Innenwand 9 der Aufnahmekammer 4 einerseits und einer frontseitige Außenwand 10 des Aufnahmeeinsatzes 5 andererseits angeordnete Sicherungseinheiten 11 zum frontseitigen Sichern des Aufnahmeeinsatzes 5 in der Höhenrichtung der Mittelkonsole 1 innerhalb der Aufnahmekammer 4 auf, wobei in Fig. 1a lediglich eine der beiden Sicherungseinheiten 11 gezeigt ist.

Jede Sicherungseinheit 11 ist in einem oberen Bereich der Aufnahmekammer 4 angeordnet und weist eine an der frontseitigen Außenwand 10 des Aufnahmeeinsatzes 5 angeordnete Sicherungsaufnahme 12 und einen an der frontseitigen Innenwand 9 der Aufnahmekammer 4 angeordneten, in die Sicherungsaufnahme 12 eingreifenden Sicherungsvorsprung 13 auf. Die jeweilige Sicherungseinheit 11 ist bezüglich einer Breite der Mittelkonsole 1 bzw. Aufnahmekammer 4 seitlich bzw. in einem frontseitigen Eckbereich der Aufnahmekammer 4 angeordnet, wie es in Fig. 1b gezeigt ist. Die Sicherungsaufnahmen 12 sind an frontseitigen Eckbereichen des Aufnahmeeinsatzes 5 angeordnet, wie es in Fig. 2a gezeigt ist.

Zudem weist die Mittelkonsole 1 wenigstens ein zwischen einem heckseitigen Seitenwandvorsprung 14 der Aufnahmekammer 4 einerseits und einer heckseitigen Außenwand 15 des Aufnahmeeinsatzes 5 andererseits angeordnetes, gummielastisches Vorspannungselement 16 auf, das zwischen dem heckseitigen Innenwandvorsprung 14 der Aufnahmekammer 4 und der heckseitigen Außenwand 15 des Aufnahmeeinsatzes 5 eigespannt ist.

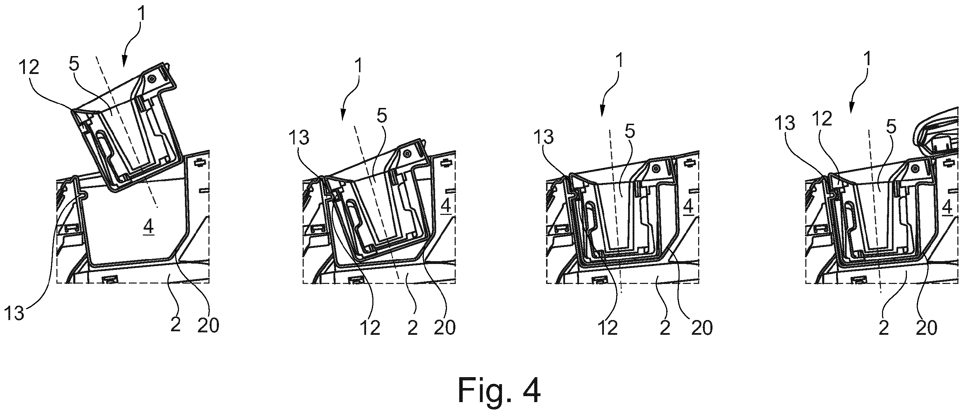

In der Aufnahmekammer 4 sind seitlich zwei Führungskonturen 17 angeordnet, von denen in den Figuren 1a und 1b lediglich eine Führungskontur 17 gezeigt ist und entlang denen ein abgerundeter Führungsabschnitt 18 des Aufnahmeeinsatzes 5 während eines Einsetzens des Aufnahmeeinsatzes 5 in die Aufnahmekammer 4 führbar ist, wie es in Fig. 4 gezeigt ist. Die Führungskontur 17 weist einen vertikalen Führungsabschnitt 19, der auch die heckseitige Innenwand 14 der Aufnahmekammer 4 bildet, und einen sich unten daran anschließenden heckseitig geneigten Führungsabschnitt 20 auf.

Fig. 1b zeigt eine schematische und perspektivische Darstellung der in Fig. 1 gezeigten Mittelkonsole 1 von schräg oben, wobei der in Fig. 1a gezeigte Aufnahmeeinsatz 5 entfernt worden ist. Es ist insbesondere eine der beiden seitlichen Führungskonturen 17 gezeigt. Zudem sind die beiden Sicherungsvorsprünge 13 der Sicherungseinheiten 11 gezeigt, die in frontseitigen Eckbereichen der Aufnahmekammer 4 angeordnet sind.

Fig. 2a zeigt eine schematische und perspektivische Darstellung des in Fig. 1 gezeigten Aufnahmeeinsatzes 5 von schräg oben. Es sind die Sicherungsaufnahmen 12 zu sehen, die in frontseitigen Eckbereichen des Aufnahmeeinsatzes 5 angeordnet sind.

Zudem sind zwei seitlich voneinander beabstandete, gummielastische frontseitige Positionierungsvorsprünge 21 des Aufnahmeeinsatzes 5 gezeigt, die an der frontseitigen Außenwand 10 des Aufnahmeeinsatzes 5 angeordnet sind. Des Weiteren sind an jeder seitlichen Außenwand 22 des Aufnahmeeinsatzes 5 zwei seitlich voneinander beabstandete, gummielastische seitliche Positionierungsvorsprünge 23 angeordnet. Ferner sind an einer Unterseite des heckseitigen Kragens 7 des Aufnahmeeinsatzes 5 zwei seitlich voneinander beabstandete, gummielastische Abstandselemente 24 angeordnet, von denen in Fig. 2 lediglich ein Abstandselement 24 gezeigt ist. Die Positionierungsvorsprünge 21 und 23 sowie die Abstandselemente 24 können Fertigungstoleranzen kompensieren und verhindern eine Geräuschentwicklung bei Relativbewegungen zwischen dem Aufnahmeeinsatz 5 und dem Grundkörper 2 der Mittelkonsole 1 während einer Fahrt des Fahrzeugs.

Fig. 2b zeigt eine weitere schematische und perspektivische Darstellung des in Fig. 1 gezeigten Aufnahmeeinsatzes 5 von schräg oben. Es sind insbesondere die beiden heckseitigen Vorspannungselemente 16 des Aufnahmeeinsatzes 5 gezeigt. Diese Vorspannungselemente 16 sind wie erkennbar vorteilhaft jeweils außenseitig an Eckbereichen des Aufnahmeeinsatzes 5 angeordnet und liegen jeweils an den Seitenwandvorsprüngen 14 an.

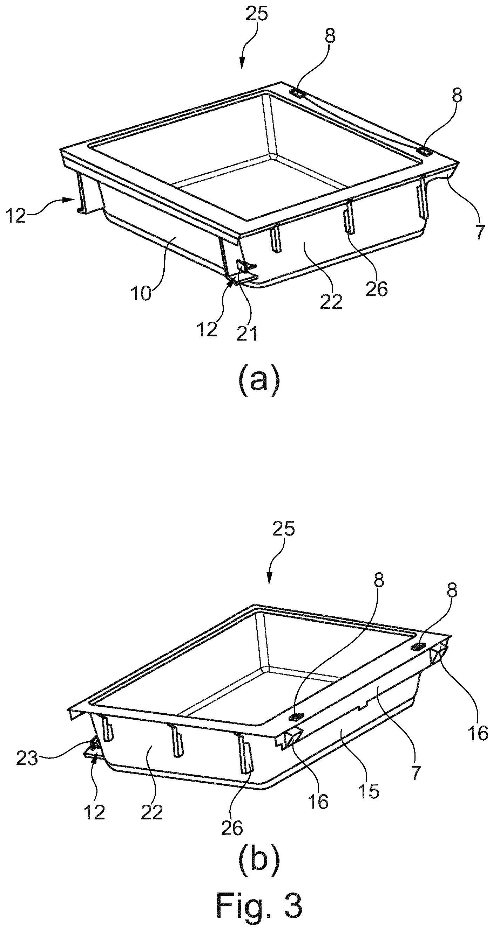

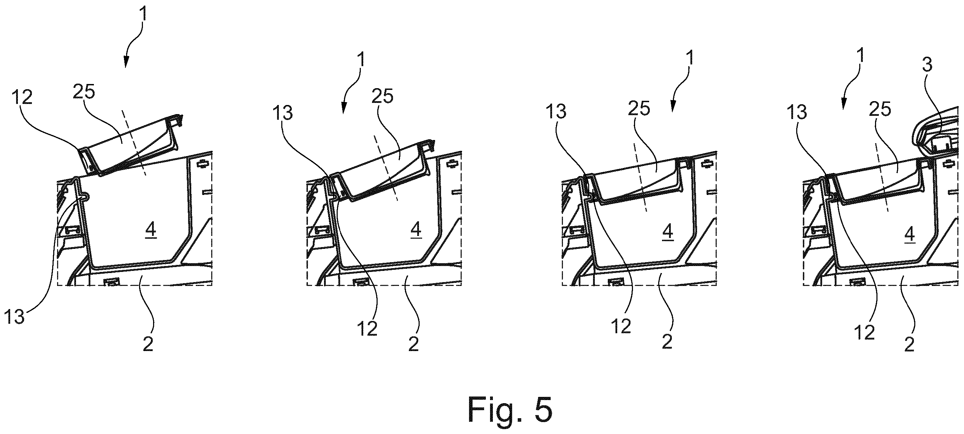

Fig. 3a zeigt eine schematische und perspektivische Darstellung eines weiteren Aufnahmeeinsatzes 25 für die in Fig. 1 gezeigte Mittelkonsole von schräg oben. Im Unterschied zu dem in den Fig. 1 und 2 gezeigten Ausführungsbeispiel ist der Aufnahmeeinsatz 25 als Ablagefach ausgebildet. Der Aufnahmeeinsatz 25 ist statt des in den Fig. 1 und 2 gezeigten Aufnahmeeinsatzes 5 in die in Fig. 1 gezeigte Aufnahmekammer 4 einsetzbar, wie es in Fig. 5 gezeigt ist.

An einem heckseitigen Kragen 7 bzw. einem dadurch gebildeten heckseitigen Endabschnitt des Aufnahmeeinsatzes 25 sind zwei Dämpfungselemente 8 seitlich voneinander beabstandet angeordnet, über das der frontseitige Endabschnitt der in der horizontalen Lehnenstellung befindlichen und in Fig. 1a gezeigten Armlehne auf dem heckseitigen Endabschnitt des in die in Fig. 1 gezeigte Aufnahmekammer eingesetzten Aufnahmeeinsatzes 25 aufliegt. Wie den Figuren entnommen werden kann, sind die heckseitige Kragen 7 zum einem des Aufnahmeeinsatzes 5 und zum anderen des Aufnahmeeinsatzes 25 unterschiedlich ausgeführt. Insbesondere ist der heckseitige Kragen 7 des Aufnahmeeinsatzes 5 in seiner Höhenerstreckung betrachtet größer als der heckseitige Kragen 7 des Aufnahmeeinsatzes 25.

An einer heckseitigen Außenwand 15 des Aufnahmeeinsatzes 25 sind zwei in Fig. 3b gezeigte gummielastische Vorspannungselemente 16 angeordnet. An einer frontseitigen Außenwand 10 des Aufnahmeeinsatzes 25 sind zwei seitlich voneinander beabstandete, elastische frontseitige Positionierungsvorsprünge 21 angeordnet. An jeder seitlichen Außenwand 22 des Aufnahmeeinsatzes 25 sind zwei seitlich voneinander beabstandete, elastische seitliche Positionierungsvorsprünge 23 angeordnet. Zudem sind an jeder seitlichen Außenwand 22 des Aufnahmeeinsatzes 25 beispielhaft drei elastische Abstandsrippen 26 mit verschiedenen Höhenerstreckungen angeordnet, die die Einsetztiefe des Aufnahmeeinsatzes 25 bestimmen, aber auch geräuschdämpfend wirken. Auf diese Abstandsrippen 26 wird zu Figur 6 noch einmal eingegangen. An der frontseitigen Außenwand 10 des Aufnahmeeinsatzes 25 sind zudem eckseitig zwei Sicherungsaufnahmen 12 ausgebildet.

Fig. 4 zeigt schematische Längsschnittdarstellungen zu einem Einsetzvorgang zum Einsetzen des in den Fig. 1 und 2 gezeigten Aufnahmeeinsatzes 5 in die Aufnahmekammer 4.

Zunächst wird die Armlehne 3 in ihre vertikale Freigabestellung gebracht. Anschließend wird der Aufnahmeeinsatz 5 in einer geneigten Stellung von oben in die Aufnahmekammer 4 eingefügt, wie es in der linken Darstellung von Fig. 4 gezeigt ist, bis die Sicherungsvorsprünge 13 in die Sicherungsaufnahmen 12 eingreifen, wie es in der zweiten Darstellung von links in Fig. 4 gezeigt ist. Danach wird der Aufnahmeeinsatz 5 um die Sicherungseinheit 11 verschwenkt, wobei der Führungsabschnitt 18 entlang des Führungsabschnitts 20 der Führungskontur 17 der Aufnahmekammer 4 geführt wird, bis der in der zweiten Darstellung von rechts in Fig. 4 gezeigte Zustand erreicht ist. Zuletzt wird die Armlehne 3 in die horizontale Lehnenstellung verschwenkt, wie es in der rechten Darstellung von Fig. 4 gezeigt ist. Durch eine Umkehrung der Reihenfolge dieser Schritte kann der Aufnahmeeinsatz 5 aus der Aufnahmekammer 4 entfernt werden.

Fig. 5 zeigt schematische Längsschnittdarstellungen zu einem Einsetzvorgang zum Einsetzen des in Fig. 3 gezeigten weiteren Aufnahmeeinsatzes 25 in die Aufnahmekammer 4.

Zunächst wird die Armlehne 3 in ihre vertikale Freigabestellung gebracht. Anschließend wird der Aufnahmeeinsatz 25 in einer geneigten Stellung von oben in die Aufnahmekammer 4 eingefügt, wie es in der linken Darstellung von Fig. 5 gezeigt ist, bis die Sicherungsvorsprünge 13 in die Sicherungsaufnahmen 12 eingreifen, wie es in der zweiten Darstellung von links in Fig. 5 gezeigt ist. Danach wird der Aufnahmeeinsatz 25 um die Sicherungseinheit 11 verschwenkt, bis der in der zweiten Darstellung von rechts in Fig. 5 gezeigte Zustand erreicht ist. Zuletzt wird die Armlehne 3 in die horizontale Lehnenstellung verschwenkt, wie es in der rechten Darstellung von Fig. 5 gezeigt ist. Durch eine Umkehrung der Reihenfolge dieser Schritte kann der Aufnahmeeinsatz 25 aus der Aufnahmekammer 4 entfernt werden.

Fig. 6a zeigt eine schematische und perspektivische Darstellung eines Ausführungsbeispiels für eine erfindungsgemäße Mittelkonsole 1 in einer ersten Konfiguration. Diese Mittelkonsole 1 unterscheidet sich dadurch von dem in den Fig. 1 bis 5 gezeigten Ausführungsbeispiel, dass in den teilweise unterhalb der in ihrer in Fig. 6a gezeigten horizontalen Lehnenstellung befindlichen Armlehne 3 befindlichen heckseitigen Abschnitt der Aufnahmekammer 4 ein weiterer Aufnahmeeinsatz 25 derart von oben zumindest teilweise eingesetzt ist, dass der weitere Aufnahmeeinsatz 25 heckseitig versetzt zu dem in einem frontseitigen Abschnitt der Aufnahmekammer 4 eingesetzten Aufnahmeeinsatz 5 angeordnet ist, wie es in Fig. 6b gezeigt ist. Dabei ist der Aufnahmeeinsatz 25 bezogen auf den Aufnahmeeinsatz 5 um 90° gedreht, also quasi längs in dem heckseitigen Abschnitt der Aufnahmekammer 4 lagestabil gelagert, indem der Aufnahmeeinsatz 25 an entsprechenden Klemmmitteln 27 gehalten ist, die an den Seitenwänden des heckseitigen Abschnitts der Aufnahmekammer 4 angeordnet sind. Die Klemmmittel 27 können zumindest einseitig mit einem der Vorspannungselemente 16 zusammenwirken. Dabei sind die Klemmmittel so angeordnet und ausgeführt, dass eventuell in dem heckseitigen Abschnitt der Aufnahmekammer 4 aufgenommene grö-βere Gegenstände, wie beispielsweise Taschen oder dergleichen von diesen Klemmmitteln nicht kontaktiert werden. Vielmehr liegen die vorspringenden Vorspannelemente 16 an den Klemmmitteln 27 an, welche auch ausweichen können, sodass die in dem heckseitigen Abschnitt der Aufnahmekammer 4 aufgenommenen Aufnahmeeinsätze 5 oder 25 quasi federkraftbelastet gelagert sind. Erkennbar ist so auch, dass bei diesem Ausführungsbeispiel der frontseitige Abschnitt der Aufnahmekammer 4 breiter ausgeführt ist als der heckseitige Abschnitt, wobei sich die Aufnahmekammer 4 quasi leicht konusartig in Richtung zur Heckseite verjüngt. In Fig. 6c ist der Aufnahmeeinsatz 5 aus der Aufnahmekammer 4 entfernt worden. Erkennbar sind seitliche Auflageschultern 28, die von der Frontseite in Richtung zur Heckseite der Aufnahmekammer 4 abfallend geneigt sind und an dem Seitenwandvorsprung 14 enden. Anschließend kann der weitere Aufnahmeeinsatz 25 dem heckseitigen Abschnitt der Aufnahmekammer 4 entnommen, um eine Höhenachse um 90° gedreht und in diesem Zustand in den frontseitigen Abschnitt der Aufnahmekammer 4 eingesetzt werden, wie es in Fig. 6d gezeigt ist. In dem die Abstandsrippen 26 an dem Aufnahmeeinsatz 25 angeordnet sind, kann durch deren unterschiedliche Höhenerstreckung ein bündiger Abschluss mit der Oberkante der betrefflichen Seitenwand der Aufnahmekammer 4 sichergestellt sein. In Figur 6d ist beispielhaft erkennbar, dass der Aufnahmeeinsatz 25 leicht heckseitig geneigt gelagert ist, wobei auf Abstandsrippen verzichtet wurde. Die Neigung der Aufnahmeeinsatzes 25 kann dafür sorgen, dass darin gelagerte Gegenstände immer heckseitig orientiert verlagert werden. Natürlich können die Abstandsrippen 26 auch so ausgeführt sein, dass der Aufnahmeeinsatz 25 bündig mit den Oberkanten der Aufnahmekammer 4 abschließt, also waagerecht in der Aufnahmekammer 4 aufgenommen ist, wie z.B. der Figur 5, rechts außen zu entnehmen ist. Die Vorspannungselemente 16, welche an dem (kleineren) heckseitigen Kragen 7 des Aufnahmeeinsatzes 25 angeordnet sind, können in Kontakt mit dem Seitenwandvorsprung 14 kommen. Der Aufnahmeeinsatz 5 kann nun in den heckseitigen Abschnitt der Aufnahmekammer 4 eingesetzt werden, und dort wie zuvor der Aufnahmeeinsatz 25 quasi längs aufgenommen, und lagestabil gehalten werden. Selbstverständlich kann der Aufnahmeeinsatz 5 auch an anderer Stelle gelagert werden. Abschließend kann die Mittelkonsole 1 bzw. der heckseitige Abschnitt der Aufnahmekammer 4 geschlossen werden, indem die Armlehne 3 in ihre horizontale Lehnenstellung verschwenkt wird, wie es in Fig. 6e gezeigt ist.

Erkennbar ist dabei die nutzergewünschte anpassbare Nutzung der Mittelkonsole, indem der Nutzer frei entscheiden kann, welcher Aufnahmeeinsatz in dem frontseitigen Abschnitt der Aufnahmekammer 4 angeordnet werden soll, wobei diese Wahl jederzeit reversible ist. Natürlich kann der frontseitige Abschnitt der Aufnahmekammer 4 auch frei jeglicher Aufnahmeeinsätze gehalten werden, was so auch für den heckseitigen Abschnitt gilt. Die Aufnahmeeinsätze sind dann an geeigneter Stelle im Fahrzeug oder extern gelagert, aber jederzeit wieder einsetzbar.

### Bezugszeichenliste

- 1: Mittelkonsole
- 2: Grundkörper
- 3: Armlehne
- 4: Aufnahmekammer
- 5: Aufnahmeeinsatz
- 6: Halteaufnahme
- 7: heckseitiger Kragen von 5, 25
- 8: Dämpfungselement
- 9: frontseitige Innenwand von 4
- 10: frontseitige Außenwand von 5, 25
- 11: Sicherungseinheit
- 12: Sicherungsaufnahme
- 13: Sicherungsvorsprung
- 14: heckseitiger Innenwandvorsprung von 4
- 15: heckseitige Außenwand von 5, 25
- 16: Vorspannungselement
- 17: Führungskontur
- 18: Führungsabschnitt von 5
- 19: vertikaler Führungsabschnitt von 17
- 20: geneigter Führungsabschnitt von 17
- 21: frontseitiges Positionierungselement
- 22: seitliche Außenwand von 5, 25
- 23: seitliches Positionierungselement
- 24: Abstandselement
- 25: Aufnahmeeinsatz
- 26: Abstandsrippe
- 27: Klemmmittel
- 28: Auflageschulter

## Patentansprüche

1. Mittelkonsole (1) für ein Fahrzeug, aufweisend wenigstens eine in einem heckseitigen Bereich der Mittelkonsole (1) angeordnete Armlehne (3), die heckseitig um eine quer zu einer Längserstreckung der Mittelkonsole (1) verlaufende Schwenkachse zwischen einer horizontalen Lehnenstellung und einer vertikalen Freigabestellung schwenkbar angeordnet ist, wenigstens eine teilweise frontseitig versetzt zu der in der horizontalen Lehnenstellung befindlichen Armlehne (3) angeordnete, nach oben offene Aufnahmekammer (4), wenigstens einen von oben zumindest teilweise in die Aufnahmekammer (4) einsetzbaren Aufnahmeeinsatz (5, 25) und wenigstens eine zwischen einer frontseitigen und/oder seitlichen Innenwand (9) der Aufnahmekammer (4) einerseits und einer Außenwand (10) des Aufnahmeeinsatzes (5, 25) andererseits angeordnete Sicherungseinheit (11) zum Sichern des Aufnahmeeinsatzes (5, 25) in einer Höhenrichtung der Mittelkonsole innerhalb der Aufnahmekammer (4), wobei ein frontseitiger Endabschnitt der in der horizontalen Lehnenstellung befindlichen Armlehne (3) auf einem heckseitigen Endabschnitt des in die Aufnahmekammer (4) eingesetzten Aufnahmeeinsatzes (5, 25) aufliegt,
**dadurch gekennzeichnet, dass**
die Sicherungseinheit (11)wenigstens eine Sicherungsaufnahme (12) und wenigstens einen in die Sicherungsaufnahme (12) eingreifenden Sicherungsvorsprung (13) aufweist, wobei sich die Aufnahmekammer (4) bis in einen unterhalb der in ihrer horizontalen Lehnenstellung befindlichen Armlehne (3) befindlichen heckseitigen Bereich der Mittelkonsole (1) erstreckt, wobei in den unterhalb der in ihrer horizontalen Lehnenstellung befindlichen Armlehne (3) befindlichen heckseitigen Abschnitt der Aufnahmekammer (4) wenigstens ein weiterer Aufnahmeeinsatz (25) derart von oben zumindest teilweise eingesetzt ist, dass der weitere Aufnahmeeinsatz (25) heckseitig versetzt zu dem in einem frontseitigen Abschnitt der Aufnahmekammer (4) eingesetzten Aufnahmeeinsatz (5) angeordnet ist, und wobei der weitere Aufnahmeeinsatz (25) wahlweise statt des Aufnahmeeinsatzes (5) in den frontseitigen Abschnitt der Aufnahmekammer (4) einsetzbar ist.

2. Mittelkonsole (1) nach Anspruch 1,
**dadurch gekennzeichnet, dass**
an dem frontseitigen Endabschnitt der Armlehne (3) und/oder an dem heckseitigen Endabschnitt des Aufnahmeeinsatzes (5, 25) wenigstens ein Dämpfungselement (8) angeordnet ist, über das der frontseitige Endabschnitt der in der horizontalen Lehnenstellung befindlichen Armlehne (3) auf dem heckseitigen Endabschnitt des in die Aufnahmekammer (4) eingesetzten Aufnahmeeinsatzes (5, 25) aufliegt.

3. Mittelkonsole (1) nach Anspruch 1 oder 2,
**gekennzeichnet durch**
wenigstens ein zwischen einem heckseitigen Seitenwandvorsprung (14) der Aufnahmekammer (4) einerseits und einer Außenwand (15) des Aufnahmeeinsatzes (5, 25) andererseits angeordnetes, gummielastisches Vorspannungselement (16), das bei in die Aufnahmekammer (4) eingesetztem Aufnahmeeinsatz (5, 25) zwischen dem jeweiligen Seitenwandvorsprung (14) der Aufnahmekammer (4) und der jeweiligen Außenwand (15) des Aufnahmeeinsatzes (5, 25) eigespannt ist.

4. Mittelkonsole (1) nach einem der vorhergehenden Ansprüche,
**dadurch gekennzeichnet, dass**
an einer frontseitigen Außenwand (10) des Aufnahmeeinsatzes (5, 25) wenigstens ein frontseitiger Positionierungsvorsprung (21) angeordnet ist.

5. Mittelkonsole (1) nach einem der vorhergehenden Ansprüche,
**dadurch gekennzeichnet, dass**
an wenigstens einer seitlichen Außenwand (22) des Aufnahmeeinsatzes (5, 25) wenigstens ein seitlicher Positionierungsvorsprung (23) angeordnet ist.

6. Mittelkonsole (1) nach einem der vorhergehenden Ansprüche,
**dadurch gekennzeichnet, dass**
an wenigstens einer seitlichen Außenwand (22) des Aufnahmeeinsatzes (5, 25) wenigstens eine Abstandsrippe (26) angeordnet ist.

7. Mittelkonsole (1) nach einem der vorhergehenden Ansprüche,
**dadurch gekennzeichnet, dass**
in der Aufnahmekammer (4) wenigstens eine Führungskontur (17) angeordnet ist, entlang der ein Führungsabschnitt (18) des Aufnahmeeinsatzes (5) während eines Einsetzens des Aufnahmeeinsatzes (5) in die Aufnahmekammer (4) führbar ist.

8. Mittelkonsole (1) nach einem der vorhergehenden Ansprüche,
**dadurch gekennzeichnet, dass**
der Aufnahmeeinsatz (5, 25) als Getränkehalter oder als Ablagefach ausgebildet ist.
